# EUROPÄISCHE PATENTANMELDUNG

(11) **EP 4 442 109 A1**
(43) Veröffentlichungstag der Anmeldung: **09.10.2024**
(21) Anmeldenummer: 24162908.8
(22) Anmeldetag: 12.03.2024
(51) Int. Cl.: A01F 15/07

(54) **BINDEEINHEIT FÜR EINE RUNDBALLENPRESSE**

(30) Priorität: 06.04.2023 DE 102023108944
(71) Anmelder: Maschinenfabrik Bernard Krone GmbH & Co. KG, 48480 Spelle (DE)
(72) Erfinder: Kracht, Katharina, 49832 Andervenne (DE); Smoes, Henning, 49828 Neuenhaus (DE)

(57) **Zusammenfassung**

Die Erfindung betrifft eine Bindeeinheit für eine Rundballenpresse, aufweisend ein Bindegehäuse, eine wenigstens teilweise im Bindegehäuse angeordnete Rollenaufnahme zur drehbaren Aufnahme einer Bindematerialrolle, mit einer gegenüber dem Bindegehäuse um eine Stützrollen-Drehachse drehbaren Stützrolle, sowie eine Ladehilfe, die gegenüber dem Bindegehäuse verstellbar ist zwischen einer Stützposition, in welcher die Bindematerialrolle auf ihr abstützbar ist, und einer Normalposition. Um bei einer Rundballenpresse das Ausladen einer Bindematerialrolle zu erleichtern, ist erfindungsgemäß vorgesehen, dass ein Rückhaltemechanismus dazu eingerichtet ist, eine Drehbewegung der Stützrolle wenigstens zu beschränken, wenn die Ladehilfe in der Stützposition angeordnet ist und die Drehbewegung freizugeben, wenn die Ladehilfe in der Normalposition angeordnet ist.

## Beschreibung

Die vorliegende Erfindung betrifft eine Bindeeinheit nach dem Oberbegriff von Anspruch 1 sowie eine Rundballenpresse nach Anspruch 15.

Rundballenpressen werden in der Landwirtschaft eingesetzt, um Erntegut wie zum Beispiel Gras, Heu oder Stroh aufzunehmen und zu Ballen zu verpressen. Das Erntegut wird (zum Beispiel durch eine Pick-up) vom Boden aufgenommen, weitergefördert, normalerweise zerkleinert (zum Beispiel mittels eines Schneidrotors) und schließlich in einer Presskammer zu runden, annähernd zylinderförmigen Erntegutballen verpresst, die anschließend mit einem Bindematerial umwickelt werden. Rundballenpressen weisen regelmäßig eine Bindeeinheit auf, die zur Aufnahme einer Bindematerialrolle oder dergleichen ausgebildet ist, sowie dazu, das Bindematerial zur Presskammer zuzuführen, zum Beispiel mittels eines beweglichen Zuführschnabels, der ein Ende des Bindematerials erfasst. Das zugeführte Bindematerial kann dann zum Binden des gepressten Ballens genutzt werden. Als Bindematerial können Schnüre, Netze oder (zum Beispiel im Falle von Gras) Folien verwendet werden. Zusätzlich kann der bereits gebundene Erntegutballen außerhalb der Rundballenpresse in einem hiervon separaten Ballenwickelgerät mit einer Wickelfolie umwickelt und versiegelt werden, so dass zum Beispiel Silage im Ballen gebildet und gelagert werden kann.

Um eine Bindematerialrolle in die Bindeeinheit einzusetzen und/oder aus dieser herauszunehmen ist es im Stand der Technik bekannt, die Bindeeinheit in eine Position zu verstellen, in welcher der Benutzer leichter Zugriff nehmen kann. Dabei kann die Bindeeinheit nach vorne und/oder abwärts verstellt werden. Außerdem ist es bekannt, die Bindeeinheit mit einer verstellbaren Ladehilfe zu versehen, die zum Beispiel schwenkbar mit einem Bindegehäuse der Bindeeinheit verbunden ist. Zum Beladen der Bindeeinheit wird die Ladehilfe abwärts geschwenkt, so dass sie die Bindematerialrolle aufnehmen und abstützen kann. Unter Umständen kann die Bindematerialrolle von der Seite auf die Ladehilfe aufgeschoben werden. Dann wird die Ladehilfe mit der Bindematerialrolle aufwärts geschwenkt, so dass letztere in eine Rollenaufnahme der Bindeeinheit eingebracht wird. Die Ladehilfe wird arretiert und bildet somit eine zusätzliche Absicherung der Bindematerialrolle. Beim Entladen muss die Ladehilfe entriegelt und abwärtsgeschwenkt werden, bevor die Bindematerialrolle aus der Rollenaufnahme heraus und auf die Ladehilfe befördert werden kann.

Ein typischer Aufbau einer Rollenaufnahme sieht zwei drehbar gelagerte Rollen vor, die die Bindematerialrolle gemeinsam abstützen. Die hintere Rolle kann als Bremsrolle dazu vorgesehen sein, die Drehung der Bindematerialrolle beziehungsweise das Abwickeln des Bindematerialstrangs abzubremsen, während die vordere, der Ladehilfe zugewandte Rolle als Stützrolle frei drehbar ist. Letztere Eigenschaft erschwert insbesondere das Ausladen der Bindematerialrolle, wobei der Benutzer die Bindematerialrolle händisch über die Stützrolle nach vorne ziehen muss. Aufgrund ihrer Drehbarkeit bildet die Stützrolle keine feste Auflage und kann somit nicht als Widerlager dienen, wenn der Benutzer die Bindematerialrolle in einem oberen Bereich ergreift, um sie über die Stützrolle zu rollen. Stattdessen kommt es oft vor, dass sich die Stützrolle unter der Bindematerialrolle wegdreht und letztere somit zurück in die Rollenaufnahme fällt. Dabei ist die z.T. erhebliche Masse einer Bindematerialrollen zu berücksichtigen, die zumindest in vollem Zustand typischerweise zwischen 40 und 50 kg, in einigen Fällen auch bei bis zu 100 kg liegt.

Aufgabe der Erfindung ist es, bei einer Rundballenpresse das Ausladen einer Bindematerialrolle zu erleichtern.

Die Aufgabe wird gelöst mit einer Bindeeinheit mit den Merkmalen des unabhängigen Patentanspruchs 1. Vorteilhafte Ausführungsformen sind den abhängigen Ansprüchen entnehmbar.

Dafür wird eine Bindeeinheit für eine Rundballenpresse geschaffen, aufweisend ein Bindegehäuse, eine wenigstens teilweise im Bindegehäuse angeordnete Rollenaufnahme zur drehbaren Aufnahme einer Bindematerialrolle, mit einer gegenüber dem Bindegehäuse um eine Stützrollen-Drehachse drehbaren Stützrolle, sowie eine Ladehilfe, die gegenüber dem Bindegehäuse verstellbar ist zwischen einer Stützposition, in welcher die Bindematerialrolle auf ihr abstützbar ist, und einer Normalposition.

Die Rundballenpresse ist zum Pressen von landwirtschaftlichem Erntegut zu (Rund-) Ballen ausgebildet. Sie kann selbstfahrend ausgebildet sein oder dazu vorgesehen sein, von einem Schlepper gezogen zu werden. Bei dem landwirtschaftlichen Erntegut kann es sich insbesondere um Halmgut wie Gras, Stroh oder Heu handeln, aber zum Beispiel auch um Häckselmais. Sie weist in aller Regel einen Rahmen auf, der die Grundstruktur der Rundballenpresse bildet und ihr insgesamt Stabilität verleiht. Am Rahmen sind über eine geeignete Aufhängung auch die Laufräder der Rundballenpresse angebunden, ebenso wie - im Falle einer gezogenen Ausgestaltung - eine Deichsel. Außerdem weist der Rahmen typischerweise ein Gehäuse auf, das die innenliegenden Teile, namentlich die Pressvorrichtung, nach außen abschirmt. Der eigentliche Pressvorgang erfolgt innerhalb der Presskammer durch die Pressvorrichtung, welche wenigstens teilweise, ggf. auch vollständig, innerhalb eines Rahmens angeordnet sein kann. Die Presskammer, in der die Ballenbildung und das Pressen des Ballens erfolgen, ist wenigstens teilweise durch die Pressvorrichtung begrenzt oder definiert. Die Pressvorrichtung weist typischerweise wenigstens ein gegenüber dem Rahmen bewegliches Presselement (normalerweise eine Mehrzahl von Presselementen) auf. Das Erntegut kann mit einer Pick-up aufgenommen werden und mit einer Fördervorrichtung, zum Beispiel einem Förderrotor, weiter in Richtung der Presskammer gefördert werden. Statt einer einfachen Fördervorrichtung oder zusätzlich zu dieser kann eine Schneidvorrichtung vorgesehen sein, die das Erntegut nicht nur weiterfördert, sondern auch schneidet. Normalerweise weist die Rundballenpresse einen Zuführkanal auf, den der Erntegutstrom durchläuft, bevor er zur Presskammer gelangt.

Die Bindeeinheit dient dazu, einen Bindevorgang einzuleiten, bei dem ein Ballen nach seiner Formung mit Bindematerial versehen wird, zum Beispiel mit wenigstens einer Schnur, einem Netz oder einer Folie. In eingebautem Zustand kann die Bindeeinheit bezüglich einer Längsachse vorderseitig der Presskammer angeordnet sein, das heißt die Bindeeinheit kann in Fahrtrichtung an beziehungsweise vor der Vorderseite der Presskammer angeordnet sein. Es sind aber auch andere Anordnungen denkbar, zum Beispiel oberhalb der Presskammer und/oder bezüglich der Längsachse hinterseitig der Presskammer. Hier und im Folgenden beziehen sich Aussagen hinsichtlich der Längsachse, der Querachse und der Hochachse immer auf den eingebauten Zustand der Bindeeinheit und somit auf die Ballenpresse, wobei die Längsachse entgegen der Fahrtrichtung nach hinten, die Querachse in Fahrtrichtung gesehen nach rechts und die Hochachse nach oben weist. Die Bindeeinheit weist ein Bindegehäuse auf. Dieses bildet ein stabiles Gerüst, an welchem andere Komponenten der Bindeeinheit starr oder beweglich angeordnet sein können. Das Gehäuse ist normalerweise in sich starr ausgebildet und kann aus einer Mehrzahl von starr verbundenen Teilen bestehen. Der Begriff "Gehäuse" ist nicht dahingehend auszulegen, dass dieses überwiegend geschlossen ausgebildet sein muss. Man kann auch von einem Binderahmen sprechen. Bei einigen Ausführungsformen ist das Bindegehäuse klar abgegrenzt, insbesondere von einem oben genannten Gehäuse, das die Presskammer umschließt. Bei anderen Ausführungsformen können diese beiden Gehäuse wenigstens teilweise einteilig miteinander ausgebildet sein. Sie können dabei ohne klare Abgrenzung ineinander übergehen. In diesem Fall bildet das Bindegehäuse einen Abschnitt oder einen Teil eines Gesamtgehäuses. Entsprechend sind auch Ausführungsformen denkbar, in denen das Bindegehäuse wenigstens teilweise einteilig mit dem oben genannten Rahmen der Rundballenpresse ausgebildet ist. In anderen Ausgestaltungen ist das Bindegehäuse verstellbar mit dem Rahmen verbunden, insbesondere mit einer Bindungsbrücke des Rahmens.

Weiterhin weist die Bindeeinheit eine wenigstens teilweise im Bindegehäuse angeordnete Rollenaufnahme auf, zur drehbaren Aufnahme einer Bindematerialrolle, und mit einer gegenüber dem Bindegehäuse um eine Stützrollen-Drehachse drehbare Stützrolle. Die Rollenaufnahme ist dazu eingerichtet, eine Bindematerialrolle aufzunehmen. Die Bindematerialrolle, welche streng genommen nicht Teil der Bindeeinheit ist, weist normalerweise einen zylindrischen Rollenkern auf, der zum Beispiel aus Pappe oder Kunststoff bestehen kann. Auf diesen Rollenkern ist das Bindematerial aufgewickelt, zum Beispiel ein Netz oder eine Folie. Insgesamt ist die Bindematerialrolle normalerweise annähernd zylinderförmig ausgebildet, wobei die aktuelle Form auch davon abhängen kann, wie viel Bindematerial bereits abgewickelt wurde. Die Rollenaufnahme ist derart ausgebildet, dass die Bindematerialrolle drehbar aufgenommen werden kann, das heißt die Bindematerialrolle kann um eine Bindematerialrollenachse, die einer Symmetrieachse der Bindematerialrolle entsprechen kann, gedreht werden. Typischerweise verläuft diese Bindematerialrollenachse parallel zur Querachse der Rundballenpresse. Die Rollenaufnahme kann ganz oder teilweise innerhalb des Bindegehäuses angeordnet sein. Die Rollenaufnahme weist eine Stützrolle auf, die gegenüber dem Bindegehäuse um eine Stützrollen-Drehachse drehbar ist. Die Stützrollen-Drehachse verläuft normalerweise ebenfalls parallel zur Querachse. Durch die Drehbarkeit der Stützrolle kann die Bindematerialrolle anteilig auf der Stützrolle abgestützt sein und sich drehen, während die Stützrolle sich in entgegengesetzter Richtung dreht. Das heißt die Bindematerialrolle und die Stützrolle rollen aneinander ab, ohne dass sich die Positionen ihrer Drehachsen (wesentlich) ändern. Die Stützrolle kann auch dazu vorgesehen sein, ein Bremsmoment auf die Bindematerialrolle auszuüben, in welchem Fall sie auch als Bremsrolle bezeichnet werden kann. Die Funktionsweise einer Bremsrolle wird weiter unten noch beschrieben. Es versteht sich, dass die Rollenaufnahme wenigstens ein weiteres Element aufweisen muss, um eine stabile Aufnahme der Bindematerialrolle zu gewährleisten. Die Bindeeinheit kann auch einen Sicherungsbügel aufweisen, der in einer geschlossenen Position oberseitig auf der Bindematerialrolle aufliegt, wenn diese in der Rollenaufnahme angeordnet ist. Zum Entnehmen oder Einlegen der Bindematerialrolle ist der Sicherungsbügel aufwärts in eine geöffnete Position verschwenkbar.

Außerdem weist die Bindeeinheit eine Ladehilfe auf, die gegenüber dem Bindegehäuse verstellbar ist zwischen einer Stützposition, in welcher die Bindematerialrolle auf ihr abstützbar ist, und einer Normalposition. Die Ladehilfe ist dazu ausgebildet, in der Stützposition die Bindematerialrolle abzustützen. Das heißt in dieser Position bildet sie eine Unterstützung und/oder Aufnahme für die Bindematerialrolle. Vorteilhaft ist die Bindematerialrolle ausschließlich durch die Ladehilfe abstützbar, wenn diese in der Stützposition ist. Abgesehen von der reinen Stützfunktion kann sie ein Auf- und Abladen der Bindematerialrolle von der Seite (also bezüglich der Querachse der Rundballenpresse seitlich) unterstützen, wenn sie eine Mehrzahl von Rollen aufweist, die um Achsen drehbar sind, die zum Beispiel parallel zur Längsachse verlaufen. Vorteilhaft ist die Bindematerialrolle bezüglich der Längsachse vor der Rollenaufnahme auf der Ladehilfe abstützbar. In der Normalposition ist die Ladehilfe evtl. nicht zum unterseitigen Abstützen der Bindematerialrolle eingerichtet, wenngleich sie diese ggf. in horizontaler Richtung absichern kann. UNTER UMSTÄNDEN könnte sie die Bindematerialrolle in der Normalposition anteilig von unten abstützen, also gemeinsam mit wenigstens einem weiteren Element. Die Normalposition kann während des Betriebs der Rundballenpresse eingenommen werden, also wenn eine Bindematerialrolle in der Rollenaufnahme aufgenommen ist und die Bindeeinheit insoweit betriebsbereit ist. Ansonsten dient der Begriff "Normalposition" vorrangig zur Unterscheidung und ist nicht einschränkend auszulegen. Je nach Ausführungsform kann die Ladehilfe in der Normalposition aufgestellt sein, so dass man von einer Aufstellposition sprechen kann, und/oder sie kann so angeordnet sein, dass sie die Bindematerialrolle zurückhalten kann, so dass man von einer Rückhalteposition oder Sicherungsposition sprechen kann. Eine derartige Anordnung der Ladehilfe in der Normalposition ist allerdings nicht erfindungswesentlich. Bevorzugt ist die Ladehilfe in der Normalposition gegenüber dem Bindegehäuse arretierbar. Sowohl das Verstellen der Ladehilfe zwischen der Stützposition und der Normalposition als auch das Arretieren der Ladehilfe können manuell erfolgen. Beides wäre aber auch aktorisch möglich.

Erfindungsgemäß ist ein Rückhaltemechanismus dazu eingerichtet, eine Drehbewegung der Stützrolle wenigstens zu beschränken, wenn die Ladehilfe in der Stützposition angeordnet ist, und die Drehbewegung freizugeben, wenn die Ladehilfe in der Normalposition angeordnet ist. Die Funktion des Rückhaltemechanismus ist also abhängig von der jeweiligen Position der Ladehilfe. Ist die Ladehilfe in der Stützposition angeordnet, beschränkt der Rückhaltemechanismus die Drehbewegung der Stützrolle zumindest. Eine Beschränkung liegt zum Beispiel dann vor, wenn die Stützrolle um einen begrenzten Winkel drehbar ist, jedoch nicht weiter. Die Drehbewegung kann auch völlig verhindert werden. Eine solche Beschränkung oder Verhinderung liegt auch vor, wenn eine weitere Drehung zwar möglich wäre, allerdings nur durch Einwirkung eines so großen Drehmoments, dass dies im bestimmungsgemäßen Betrieb der Rundballenpresse ausgeschlossen werden kann. Die Beschränkung oder Verhinderung der Drehbewegung kann auch nur bezüglich einer Drehrichtung gegeben sein, während die Stützrolle in der Gegenrichtung beliebig weit drehbar ist. Ist die Ladehilfe in der Normalposition, gibt der Rückhaltemechanismus die Drehbewegung frei, so dass sich die Stützrolle um beliebige Winkel drehen kann. Selbstverständlich können auch nach der Freigabe noch Reibungskräfte auf die Stützrolle einwirken, zum Beispiel falls die Stützrolle wie oben erwähnt als Bremsrolle fungiert. Diese Reibungskräfte sind allerdings nicht geeignet, die Drehbarkeit der Bindematerialrolle zu verhindern oder auf einen begrenzten Bereich einzuschränken.

Ist die Ladehilfe in der Normalposition, kann die Stützrolle beliebig gedreht werden, was eine optimale Abstützung der sich ihrerseits drehenden Bindematerialrolle ermöglicht. Ist die Ladehilfe allerdings in der Stützposition, ist die Drehbarkeit der Stützrolle zumindest eingeschränkt, das heißt sie kann sich allenfalls begrenzt drehen, unter Umständen auch gar nicht. Beim Herausziehen der Bindematerialrolle aus der Rollenaufnahme wird somit in jedem Fall verhindert, dass sich die Stützrolle unkontrolliert wegdrehen kann. Somit kann der Benutzer die Bindematerialrolle zum Beispiel mit einer Schwenk- oder Kippbewegung über die Stützrolle hinwegbewegen.

Abgesehen von den hier genannten Elementen kann die Bindeeinheit eine Zuführeinheit aufweisen, durch die Bindematerial von der Rollenaufnahme in Richtung der Presskammer heranführbar ist. Die Zuführeinheit führt das Bindematerial in Richtung der Presskammer heran, also zur Presskammer hin, so dass der Ballen dort mit dem Bindematerial gebunden beziehungsweise umwickelt werden kann. Dabei ist es nicht notwendig, dass die Zuführeinheit das Bindematerial bis unmittelbar an oder gar in die Presskammer führt. Ein Teil des Zuführens kann durch ein anderes Element (zum Beispiel ein Presselement) erfolgen, an welches die Zuführeinheit das Bindematerial übergibt. Das von der Bindematerialrolle entnommene Bindematerial wird normalerweise über eine oder mehrere Umlenkrollen geleitet, die zur Zuführeinheit gehören. Die Zuführeinheit kann wenigstens teilweise gegenüber dem Bindegehäuse verstellbar sein und eine Haltevorrichtung aufweisen, die dazu ausgebildet ist, einen Endbereich des Bindematerials zu halten und an die Presskammer heranzuführen.

Alternativ zu einer Kopplung an die Ladehilfe, möglicherweise auch zusätzlich hierzu, wäre auch ein Rückhaltemechanismus denkbar, der die Drehbewegung der Stützrolle wenigstens einschränkt, wenn der oben genannte Sicherungsbügel in der geöffneten Position angeordnet ist, und die Drehbewegung freigibt, wenn der Sicherungsbügel in der geschlossenen Position angeordnet ist.

Eine bevorzugte Ausgestaltung sieht vor, dass die Rollenaufnahme eine Bremsrolle aufweist, die um eine Bremsrollen-Drehachse drehbar gelagert ist und dazu eingerichtet ist, radial außenseitig an der Bindematerialrolle anzugreifen, um diese zu bremsen, und die dazu eingerichtet ist, die Bindematerialrolle gemeinsam mit der Stützrolle abzustützen. Die Bremsrolle dient einerseits dazu, zusammen mit der Stützrolle die Bindematerialrolle abzustützen. Dabei liegt die Bindematerialrolle einerseits auf der Stützrolle und andererseits auf der Bremsrolle auf und wird durch beide anteilig gestützt. Wie die Stützrolle ist auch die Bremsrolle drehbar gelagert, um ein Abrollen der Bindematerialrolle zu ermöglichen. Eine weitere Funktion der Bremsrolle besteht darin, das Bindematerial beim Abrollen zu bremsen und zu dehnen. Die Bremswirkung, die die Bremsrolle auf die Bindematerialrolle ausübt, ist normalerweise veränderbar. Das heißt sie kann zeitweise verstärkt oder vermindert werden. Die Bremsrolle greift radial außenseitig an der Bindematerialrolle an, also bezüglich der Bindematerialrollenachse radial außenseitig. Man kann auch sagen, dass die Mantelflächen der Bindematerialrolle und der Bremsrolle miteinander zusammenwirken. Dabei ist in der Regel ein Kraftschluss zwischen der Bindematerialrolle und der Bremsrolle gegeben. Dieser kann zum Beispiel dadurch gefördert werden, dass die Bremsrolle zumindest im Bereich ihrer Mantelfläche aus einem Elastomer, insbesondere Gummi, gebildet ist.

Vorteilhaft weist der Rückhaltemechanismus ein Rückhalteelement auf, das verstellbar ist zwischen einer Rückhalteposition, in welcher es an der Stützrolle angreift, um deren Drehbewegung wenigstens zu beschränken, und einer Freigabeposition, in welcher es die Stützrolle freigibt. Dabei ist das Rückhalteelement relativ zum Bindegehäuse und/oder relativ zur Stützrolle verstellbar. Insbesondere kann es am Bindegehäuse verstellbar gelagert sein. In der Rückhalteposition wirkt das Rückhalteelement mechanisch mit der Stützrolle zusammen. Dabei ist die Ladehilfe in der Stützposition. In der Freigabeposition gibt das Rückhalteelement die Stützrolle frei, steht somit nicht mit dieser derart in Eingriff, dass es ihre Drehbarkeit einschränkt. Die Freigabeposition wird zumindest dann eingenommen, wenn die Ladehilfe in der Normalposition ist. Das Rückhalteelement könnte aus mehreren Teilen zusammengesetzt sein, bevorzugt besteht es allerdings aus einem einzigen Stück, typischerweise einem Stahlteil, beispielsweise einem Blechformteil.

Bevorzugt ist die Ladehilfe dazu eingerichtet, wenigstens indirekt eine Kraft auf das Rückhalteelement auszuüben, um dieses zu verstellen. Die Ladehilfe kann die Kraft direkt ausüben, wenn sie unmittelbar in Kontakt mit dem Rückhalteelement steht, oder indirekt über wenigstens ein zwischengeordnetes Element zur Kraftübertragung. Bei einer indirekten Kraftausübung ist eine mechanische Kraftausübung bevorzugt, wenngleich zum Beispiel eine hydraulische Kraftübertragung denkbar wäre. Durch die Ausübung der Kraft wird das Rückhalteelement verstellt, wobei dies für eine Verstellung aus der Rückhalteposition in die Freigabeposition und/oder für eine Verstellung aus der Freigabeposition in die Rückhalteposition gelten kann.

Grundsätzlich kann die Verstellung des Rückhalteelements auf einer translatorischen und/oder einer rotatorischen Bewegung beruhen. Eine bevorzugte Ausführungsform sieht vor, dass das Rückhalteelement um eine Rückhalteelement-Schwenkachse zwischen der Rückhalteposition und der Freigabeposition schwenkbar ist. Das heißt, in diesem Fall erfolgt die Verstellung rein rotatorisch. Die Rückhalteelement-Schwenkachse verläuft bevorzugt parallel zur Querachse. Sie kann ihrerseits gegenüber dem Bindegehäuse beweglich sein. Bevorzugt ist sie allerdings stationär am Bindegehäuse angeordnet, so dass das Rückhalteelement eine (rein rotatorische) Schwenkbewegung gegenüber dem Bindegehäuse ausführt. Durch die rotatorische Bewegung kann eine Bewegung von einem ersten Punkt des Rückhalteelements zu einem zweiten Punkt übertragen werden, wobei sich sowohl die Richtung der Bewegung als auch der Betrag der wirkenden Kraft am zweiten Punkt von den Werten am ersten Punkt unterscheiden können, je nach radialer und tangentialer Anordnung der beiden Punkte relativ zur Rückhalteelement-Schwenkachse.

Es ist im Rahmen der Erfindung denkbar und unter Umständen ausreichend, wenn das Rückhalteelement kraftschlüssig mit der Stützrolle zusammenwirkt. In diesem Fall würde also nach Art einer Bremse eine Reibungskraft erzeugt, die unter normalen Umständen ausreicht, die Stützrolle zu arretieren. Allerdings kann dies ggf. unzuverlässig sein und kann zudem nach längerer Zeit zu einem Verschleiß führen. Vorteilhaft ist daher das Rückhalteelement dazu eingerichtet, in der Rückhalteposition formschlüssig mit der Stützrolle einzugreifen. Der Formschluss bezieht sich dabei auf die tangentiale Richtung bezüglich der Stützrollen-Drehachse. Anders ausgedrückt, ein Teil des Rückhalteelements ist der Stützrolle im Weg und verhindert somit deren ungehinderte Drehung. Der Formschluss kann dabei unvollständig sein, allein schon aus Gründen der Fertigungstoleranz. In diesem Fall lässt sich die Stützrolle trotz des Eingreifens mit dem Rückhalteelement um einen gewissen Winkelbereich drehen, was allerdings unproblematisch ist, insbesondere wenn der Winkelbereich klein ist (beispielsweise maximal 20°). Allerdings wäre auch eine Drehbarkeit der Stützrolle um einen großen Winkel von beispielsweise 300° denkbar, da die Stützrolle normalerweise viel kleiner ist als die Bindematerialrolle. Daher entspricht eine Drehung der Stützrolle um 300° einer Drehung der Bindematerialrolle um einen wesentlich kleineren Winkel, zum Beispiel 30°, was handhabungsmäßig für den Benutzer noch akzeptabel sein kann.

Im Hinblick auf eine mögliche Beschädigung der Bindematerialrolle ist es ungünstig, wenn die Stützrolle einen radial vorspringenden Abschnitt aufweist. Um den oben genannten Formschluss zu realisieren ist es stattdessen bevorzugt, dass die Stützrolle wenigstens eine tangential begrenzte Ausnehmung aufweist und das Rückhalteelement ein Eingriffselement aufweist, das dazu ausgebildet ist, in wenigstens eine Ausnehmung einzugreifen. Die Ausnehmung ist bezüglich der Stützrollen-Drehachse tangential begrenzt, beispielsweise auf einen Winkelbereich von maximal 30°. In axialer Richtung ist sie normalerweise auf einen kleinen Teil der axialen Länge der Stützrolle begrenzt, beispielsweise auf maximal 10 % oder maximal 5 %. Das Rückhalteelement weist ein Eingriffselement auf. Dieses kann zumindest in einigen Ausgestaltungen als Dornelement bezeichnet werden, wobei der Begriff "Dornelement" nicht einschränkend dahingehend auszulegen ist, dass dieses Element spitz ausgebildet sein muss. Das Eingriffselement kann sich allerdings teilweise verjüngen und/oder abgeschrägt sein, um ein Einführen in die Ausnehmung zu erleichtern. Es kann in jedem Fall mit einer Ausnehmung eingreifen, das heißt es kann ganz oder teilweise in der Ausnehmung angeordnet sein. Hierdurch wird der Formschluss realisiert. Das ist einerseits möglich, dass genau eine Ausnehmung vorgesehen ist, so dass - abgesehen von einem möglicherweise vorhandenen Spiel - die Stützrolle in genau einer Orientierung mit dem Verriegelungselement eingreifen kann. Es wäre allerdings auch denkbar, dass in tangentialer Richtung eine Mehrzahl von Ausnehmungen ausgebildet sind, so dass unterschiedliche Orientierungen der Stützrolle möglich sind.

Bevorzugt ist vorgesehen, dass ein Rückstellelement das Rückhalteelement in Richtung auf die Rückhalteposition vorspannt. Das Rückstellelement greift einerseits direkt oder indirekt am Rückhalteelement an. Andererseits kann es direkt oder indirekt am Bindegehäuse angreifen. Das Rückstellelement erzeugt eine Rückstellkraft, sowie bei einer schwenkbaren Ausgestaltung ein rückstellendes Drehmoment. Diese Rückstellkraft kann sich verstärken, wenn das Rückstellelement aus der Rückhalteposition in die Freigabeposition verstellt wird. Bei dieser Ausführungsform kann das Verstellen des Rückhalteelements in die Rückhalteposition automatisch durch das Rückstellelement bewirkt werden, solange dem keine zusätzlichen auf das Rückhalteelement wirkenden Kräfte entgegenstehen. Umgekehrt ist ein Verstellen des Rückhalteelements in die Freigabeposition nur entgegen der Rückstellkraft des Rückstellelement möglich, so dass hierfür also eine zusätzliche Kraft auf das Rückhalteelement ausgeübt werden muss. Das Rückstellelement könnte beispielsweise pneumatisch oder hydraulisch wirken, bevorzugt ist es allerdings als mechanische Feder ausgebildet, beispielsweise als Linearfeder oder Drehfeder.

Grundsätzlich kann die Verstellung der Ladehilfe auf einer translatorischen und/oder einer rotatorischen Bewegung beruhen. Eine bevorzugte Ausführungsform sieht vor, dass die Ladehilfe durch Schwenken um eine bezüglich des Bindegehäuses ortsfeste Ladehilfe-Schwenkachse zwischen der Stützposition und der Normalposition verstellbar ist. D. h., es handelt sich hierbei um eine rein rotatorische Bewegung. Das Verstellen in die Stützposition entspricht dabei regelmäßig einem Abwärtsschwenken, während das Verstellen in die Normalposition einem Aufwärtsschwenken entspricht. Beim Aufwärtsschwenken kann insbesondere eine auf der Ladehilfe abgestützte Bindematerialrolle mit angehoben und über die Stützrolle in die Rollenaufnahme gebracht werden. Zudem kann die aufwärts geschwenkte Ladehilfe, nachdem sie in der Normalposition arretiert wurde, als zusätzliche Absicherung für die Bindematerialrolle dienen.

Gemäß einer Ausgestaltung der Erfindung weist die Ladehilfe ein Führungselement auf, das dazu eingerichtet ist, beim Verstellen in die Normalposition an einem Führungsbereich des Rückhalteelements anzugreifen, um dieses in die Freigabeposition zu verstellen. Das Führungselement und der Führungsbereich stehen beim Verstellen in die Normalposition wenigstens zeitweise in Kontakt. Das Führungselement überträgt eine Kraft (sowie ggf. ein Drehmoment) auf den Führungsbereich, wodurch das Rückhalteelement in die Freigabeposition verstellt wird. Diese Ausführungsform kann mit der oben genannten kombiniert werden, wonach das Rückhalteelement mit einem Rückstellelement zusammenwirkt. Dann führt das Führungselement das Rückhalteelement entgegen der Kraft des Rückstellelements in die Freigabeposition. Das Führungselement kann sich insbesondere entlang der Querachse erstrecken und zum Beispiel als Stift oder Bolzen ausgebildet sein. Beim Verstellen in die Stützposition kann das Führungselement über den Führungsbereich das Rückhalteelement abstützen, während dieses durch das Rückstellelement in die Rückhalteposition verstellt wird.

Während es denkbar ist, dass die Ladehilfe-Schwenkachse und die Rückhalteelement-Schwenkachse identisch sind, ist dies unter Umständen aus konstruktiven Gründen ungünstig. Eine Ausführungsform sieht vor, dass die Ladehilfe-Schwenkachse und die Rückhalteelement-Schwenkachse zueinander versetzt angeordnet sind und das Führungselement verschiebbar am Führungsbereich anliegt. Aus der räumlichen Versetzung der Schwenkachsen ergibt sich zwangsläufig, dass ein Kontakt zwischen Ladehilfe und Rückhalteelement nicht während des gesamten Schwenkvorgangs im gleichen Bereich in Kontakt sein können. In dieser Ausgestaltung liegen deshalb das Führungselement und der Führungsbereich verschiebbar aneinander an. Normalerweise können sie aneinander entlanggleiten, es wäre aber auch denkbar, dass zum Beispiel das Führungselement einen Wälzkörper aufweist, der auf dem Führungsbereich abrollt.

Gemäß einer Ausführungsform sind der Führungsbereich und das Eingriffselement bezüglich der Rückhalteelement-Schwenkachse um wenigstens 90° zueinander versetzt. Sie können auch weiter zueinander versetzt sein, zum Beispiel wenigstens 120°. Man kann somit davon sprechen, dass Führungsbereich und Eingriffselement auf unterschiedlichen Seiten der Rückhalteelement-Schwenkachse angeordnet sind. Insbesondere kann das Rückhaltelement zwei Armabschnitte aufweisen, die sich in unterschiedliche Richtungen von der Rückhalteelement-Schwenkachse fort erstrecken, wobei das Eingriffselement an einem Armabschnitt und der Führungsbereich am anderen Armabschnitt ausgebildet ist. Eine "gegenüberliegende" Anordnung ist insofern vorteilhaft, als sich der Führungsbereich und das Eingriffselement dabei wenigstens teilweise entgegengesetzt bewegen. So kann sich der Führungsbereich, vom Führungselement geführt, bezüglich der Längsachse von der Stützrolle fort bewegen (zum Beispiel in Fahrtrichtung vorwärts), während sich das Eingriffselement entgegengesetzt auf die Stützrolle zu bewegt (zum Beispiel entgegen der Fahrtrichtung nach hinten).

Es ist bevorzugt, dass das Rückstellelement das Rückhalteelement gegen das Führungselement vorspannt, wenigstens während das Rückhalteelement außer Kontakt mit der Stützrolle ist. Das heißt das Rückstellelement beaufschlagt das Rückhalteelement derart mit einer Kraft sowie ggf. mit einem Drehmoment, dass hierdurch der Führungsbereich in Kontakt mit dem Führungselement gehalten wird. Dies gilt allerdings unter Umständen nur so lange, wie keine weiteren Kräfte auf das Rückhalteelement wirken. Wenn das Rückhalteelement in Kontakt mit der Stützrolle kommt, wirkt ein Kräftepaar zwischen ihnen, wodurch das Rückhalteelement gestoppt werden kann, so dass es einer weiteren Bewegung des Führungselements sowie der Ladehilfe nicht weiter folgen kann.

Vorteilhaft ist vorgesehen, dass bei einer Orientierung der Stützrolle, welche einen Formschluss mit dem Rückhalteelement verhindert, das Rückstellelement das Rückhalteelement in Kontakt mit der Stützrolle hält, bis deren Orientierung den Formschluss ermöglicht. Dies kann zum Beispiel der Fall sein, wenn eine Ausnehmung, mit der ein Eingriffselement eingreifen kann, gerade auf einer vom Eingriffselement abgewandten Seite der Stützrolle angeordnet ist. Ein Eingreifen ist erst möglich, wenn sich die Stützrolle mit der Ausnehmung zum Eingriffselement gedreht hat. Bei dieser Ausführungsform wird das Rückhalteelement in Kontakt mit der Stützrolle gehalten, liegt also an dieser an. Die durch das Rückstellelement erzeugte Kraft kann vorteilhaft so gewählt werden, dass einerseits kein übermäßiger Verschleiß zwischen Rückhalteelement und Stützrolle auftritt, wenn diese bei einer Drehung aneinander entlang gleiten, und andererseits ein zuverlässiges Eingreifen erfolgt, wenn die Orientierung der Stützrolle dies erlaubt.

Die Aufgabe wird weiterhin gelöst mit einer Rundballenpresse, welche eine Pressvorrichtung aufweist zum Pressen von landwirtschaftlichem Erntegut zu einem Ballen in einer Presskammer, sowie eine erfindungsgemäße Bindeeinheit. Das heißt die Bindeeinheit weist ein Bindegehäuse auf, eine wenigstens teilweise im Bindegehäuse angeordnete Rollenaufnahme zur drehbaren Aufnahme einer Bindematerialrolle, mit einer gegenüber dem Bindegehäuse um eine Stützrollen-Drehachse drehbaren Stützrolle, sowie eine Ladehilfe, die gegenüber dem Bindegehäuse verstellbar ist zwischen einer Stützposition, in welcher die Bindematerialrolle auf ihr abstützbar ist, und einer Normalposition. Dabei ist ein Rückhaltemechanismus dazu eingerichtet, eine Drehbewegung der Stützrolle wenigstens zu beschränken, wenn die Ladehilfe in der Stützposition angeordnet ist und die Drehbewegung freizugeben, wenn die Ladehilfe in der Normalposition angeordnet ist.

Die genannten Begriffe wurden bereits mit Bezug auf die erfindungsgemäße Bindeeinheit erläutert und werden daher nicht nochmals erklärt. Bevorzugte Ausgestaltungen der erfindungsgemäßen Rundballenpresse entsprechen denen der erfindungsgemäßen Bindeeinheit.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: eine Seitenansicht einer ersten erfindungsgemäßen Rundballenpresse mit einer erfindungsgemäßen Bindeeinheit;
- Fig. 2: eine perspektivische Darstellung der Bindeeinheit aus Fig. 1 mit einer Ladehilfe in einer Normalposition;
- Fig. 3: eine seitliche Schnittdarstellung der Bindeeinheit aus Fig.1 mit der Ladehilfe in der Normalposition; sowie
- Fig. 4: eine seitliche Schnittdarstellung der Bindeeinheit aus Fig.1 mit der Ladehilfe in einer Stützposition.

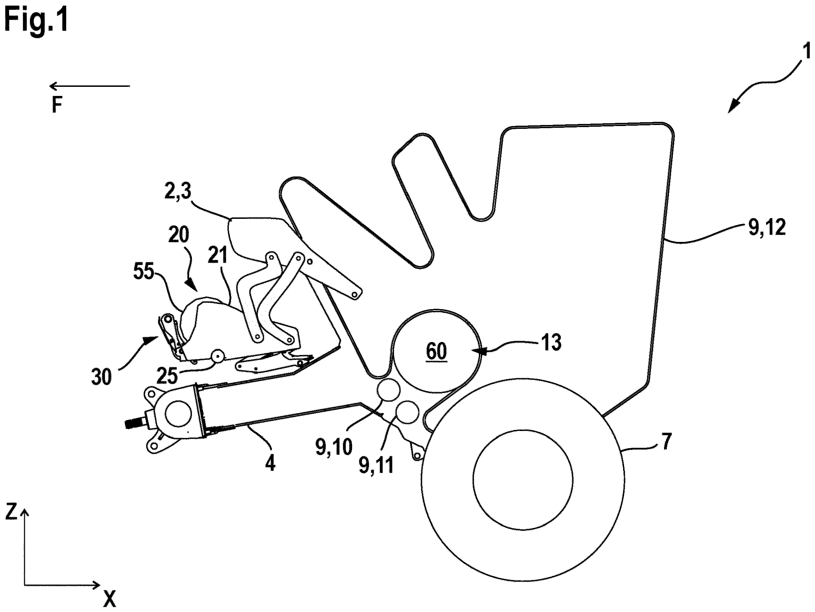

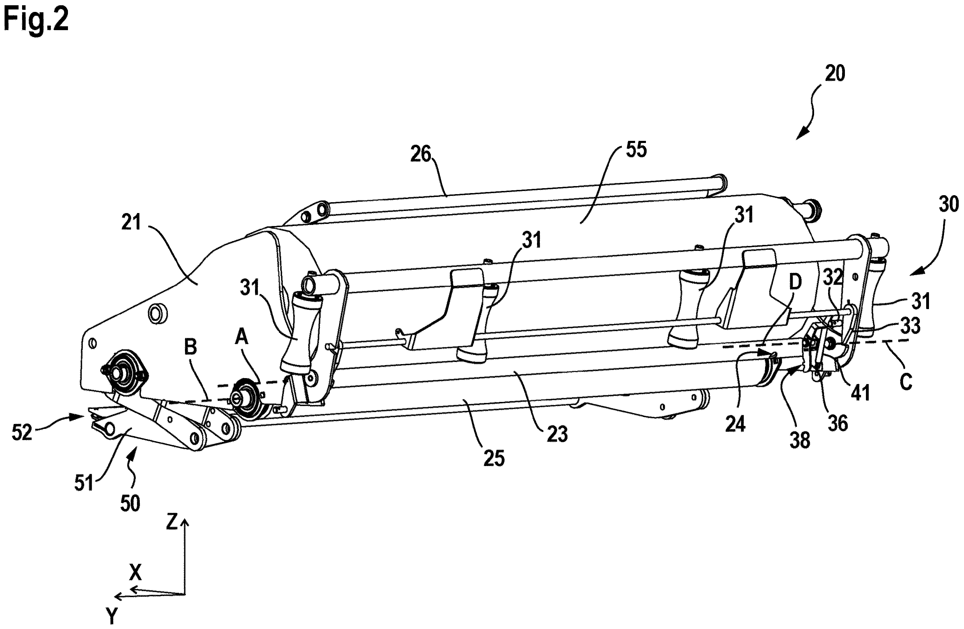

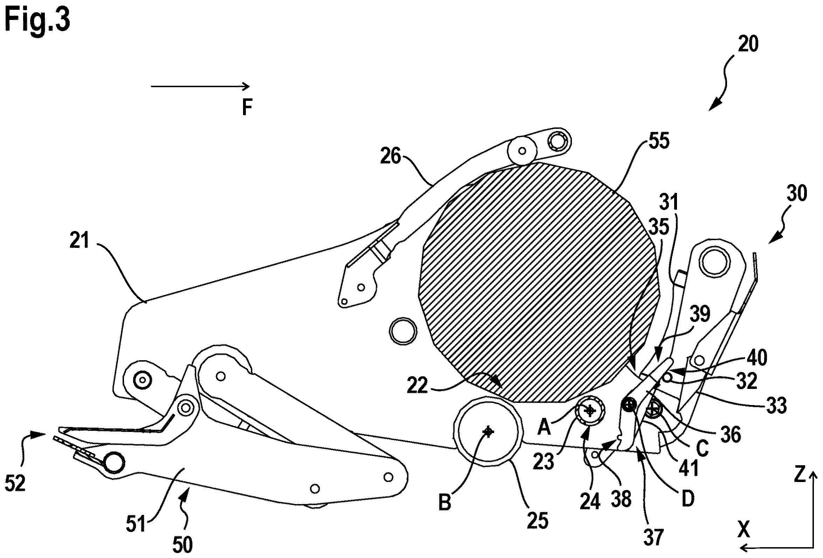

Fig. 1 - 4 zeigen eine erste Ausführungsform einer erfindungsgemäßen Rundballenpresse 1. Diese weist einen Rahmen 2 auf, der ihr insgesamt strukturelle Stabilität verleiht. Der Rahmen 2 ist auf hier schematisch dargestellten Laufrädern 7 abgestützt. In einer Fahrtrichtung F vorderseitig ist am Rahmen 2 ein Deichsel-Anbindungsbereich 4 ausgebildet. An diesem ist eine nicht dargestellte Deichsel angeordnet, über welche die Rundballenpresse 1 mit einem ebenfalls nicht dargestellten Schlepper verbunden werden kann. In den Figuren sind jeweils eine entgegen der Fahrtrichtung F nach hinten weisende Längsachse X, eine in Fahrtrichtung gesehen nach rechts weisende Querachse Y sowie eine nach oben weisende Hochachse Z der Rundballenpresse 1 eingezeichnet. Die Darstellung in Fig.1 ist vereinfacht und verschiedene Elemente, die nicht wesentlich für die vorliegende Erfindung sind, wurden weggelassen oder nicht mit Bezugszeichen versehen. Hierzu zählt eine auf Hilfsrädern abgestützte Pick-up, mit welcher Erntegut vom Boden aufgenommen und über einen Zuführkanal weiter zu einem Förderrotor befördert wird. Der Förderrotor, der auch als Schneidrotor ausgebildet sein kann, befördert das Erntegut durch den Zuführkanal weiter zu einer Presskammer 13 innerhalb des Rahmens 2. Die Presskammer 13 wird durch eine Pressvorrichtung 9 ausgebildet, von welcher zwei Walzen 10, 11 sowie ein Pressriemen 12 dargestellt sind. Der Pressriemen 12 ist in geeigneter Weise durch Führungsrollen geführt, die hier aus Gründen der Übersichtlichkeit nicht dargestellt sind. Auch ein Gehäuse, das die Pressvorrichtung 9 umgibt und das am Rahmen 2 befestigt ist, wurde weggelassen.

Fig.1 zeigt einen Zustand während der Formung eines Ballens 60, genauer gesagt, einer Anfangsphase der Formung. Wenn der Ballen 60 in der Presskammer 13 fertiggestellt wurde, wird er mit Bindematerial umwickelt, wozu die Rundballenpresse eine erfindungsgemäße Bindeeinheit 20 aufweist. Die Bindeeinheit 20 ist verstellbar mit einer Bindungsbrücke 3 des Rahmens 2 verbunden. Sie weist ein Bindegehäuse 21 auf, in welchem eine Rollenaufnahme 22 angeordnet ist. Diese ist dazu ausgebildet, eine Bindematerialrolle 55 drehbar aufzunehmen. Zur Abstützung der Bindematerialrolle 55 weist die Rollenaufnahme 22 eine Stützrolle 23 auf sowie eine Bremsrolle 25. die Stützrolle 23 ist um eine Stützrollen-Drehachse A drehbar am Bindegehäuse 21 gelagert, während die Bremsrolle 25 um eine Bremsrolle-Drehachse B drehbar gelagert ist. Beide Drehachsen A, B verlaufen parallel zur Querachse Y.

Über eine Zuführeinheit 50, welche ein Zuführpendel 51 mit einem endseitig angeordneten Zuführschnabel 52 aufweist, kann Bindematerial, welches von der Bindematerialrolle 55 abgewickelt wurde, in Richtung auf die Presskammer 13 geführt werden. Die genaue Funktion der Zuführeinheit 50 ist zum Verständnis der Erfindung nicht relevant und wird daher nicht weiter erläutert. Die in der Rollenaufnahme 22 aufgenommene Bindematerialrolle 55 dreht sich, während das Bindematerial abgewickelt wird. Um das abgewickelte Bindematerial zu straffen und zu dehnen, wird die Drehbewegung der Bindematerialrolle 55 abgebremst. Hierzu dient die Bremsrolle 25, die an eine in den Figuren nicht dargestellte Bremse gekoppelt ist. Die Bremsrolle 25 kann beispielsweise eine Mantelfläche aus Gummi aufweisen, die mit einem hohen Reibungskoeffizienten mit dem Bindematerial auf der Bindematerialrolle 55 zusammenwirkt. Die Bindeeinheit 20 weist außerdem einen Sicherungsbügel 26 auf, der oberseitig auf der Bindematerialrolle 55 aufliegt und somit deren Kontakt mit der Stützrolle 23 und der Bremsrolle 25 verbessert. Zum Entnehmen oder Einlegen der Bindematerialrolle 55 wird der Sicherungsbügel 26 aufwärts geschwenkt, also geöffnet.

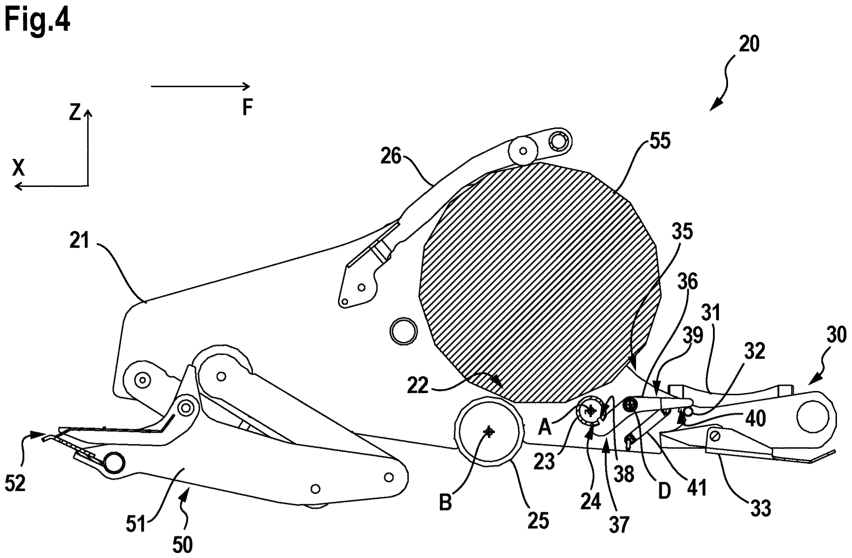

Bezüglich der Längsachse X in Fahrtrichtung F vor der Rollenaufnahme 22 ist eine Ladehilfe 30 am Bindegehäuse 21 angeordnet. Die Ladehilfe 30 ist um eine Ladehilfe-Schwenkachse C gegenüber dem Bindegehäuse 21 schwenkbar. Somit ist sie verstellbar zwischen einer in Fig. 1 bis 3 dargestellten Normalposition und einer in Fig. 4 dargestellten Stützposition. Die Normalposition ist für den normalen Betriebszustand vorgesehen, wenn die Bindematerialrolle 55 in der Rollenaufnahme 22 aufgenommen ist. Dabei erstreckt sich die Ladehilfe 30 überwiegend von der Ladehilfe-Schwenkachse C aus bezüglich der Hochachse Z aufwärts. Sie bildet bezüglich der Längsachse X vor der Bindematerialrolle 55 eine Absicherung, die beispielsweise bei stark abschüssigen Gelände oder bei einer Bremsung verhindert, dass die Bindematerialrolle 55 nach vorne aus der Rollenaufnahme 22 herausfällt. Die Ladehilfe 30 ist mittels einer hier nicht näher erläuterten Verriegelungsklinke 33 in der Normalposition arretierbar. Durch Betätigen einer Verriegelungsklinke 33 kann die Ladehilfe 30 entriegelt und in die in Fig. 4 dargestellte Stützposition geschwenkt werden, in welcher sie sich von der Ladehilfe-Schwenkachse C aus überwiegend nach vorne erstreckt und näherungsweise waagerecht ausgerichtet ist. Dabei bildet sie eine Unterlage zur Abstützung der Bindematerialrolle 55, wenn diese ein- oder ausgeladen werden soll. Die Ladehilfe 30 weist vier Laderollen 31 auf, die um Drehachsen drehbar gelagert sind, die sich jeweils senkrecht zur Querachse Y erstrecken. Daher lässt sich die aufliegende Bindematerialrolle 55 in Richtung der Querachse Y leicht über die Laderollen 31 bewegen, was ein Auf- und Abladen von der Seite wesentlich erleichtert.

Die Bindeeinheit 20 weist außerdem einen Rückhaltemechanismus 35 auf, der als zentrale Komponente ein Rückhalteelement 36 aufweist, welches auch als Rückhaltehebel bezeichnet werden kann. Dieses ist um eine Rückhalteelement-Schwenkachse D schwenkbar mit dem Bindegehäuse 21 verbunden. Es weist einen ersten Hebelarm 37 mit einem tangential abragenden Dornelement oder Eingriffselement 38 auf sowie einen zweiten Hebelarm 39 mit einem Führungsbereich 40. Der Führungsbereich 40 und das Eingriffselement 38 sind im gezeigten Beispiel um ca. 160° bis 170° tangential bezüglich der Rückhalteelement-Schwenkachse D zueinander versetzt. Der Führungsbereich 40 liegt an einem Führungselement 32 an, welches an der Ladehilfe 30 ausgebildet ist und bei deren Schwenkvorgang mit geschwenkt wird.

In der in Fig. 1 bis 3 gezeigten Normalposition der Ladehilfe 30 ist das Rückhalteelement 36 in einer Freigabeposition angeordnet. Ein Rückstellelement 41, welches hier als Schraubenfeder ausgebildet ist, ist einerseits am zweiten Hebelarm 39 sowie andererseits am Bindegehäuse 21 befestigt und übt ein Drehmoment aus, durch welches der zweite Hebelarm 39 mit dem Führungsbereich 40 in Kontakt mit dem Führungselement 32 gehalten wird. Wie klar erkennbar ist, ist das Rückhalteelement in der Freigabeposition nicht in Kontakt mit der Stützrolle 23, so dass diese im Wesentlichen frei drehbar ist. Wenn die Ladehilfe 30 um die Ladehilfe-Schwenkachse C abwärts geschwenkt wird, hält das Rückstellelement 41 den Führungsbereich 40 weiterhin in Kontakt mit dem Führungselement 32, während sich der erste Hebelarm 37 der Stützrolle 23 annähert. Schließlich trifft der erste Hebelarm 37 auf die Stützrolle 23, wobei es zwei Möglichkeiten gibt. Entweder ist eine bezüglich der Stützrollen-Drehachse A tangential begrenzte Ausnehmung 24 in Richtung auf das Eingriffselement 38 ausgerichtet, so dass dieses unmittelbar mit ihr formschlüssig eingreift. Dies entspricht einer in Fig. 4 dargestellten Rückhalteposition des Rückhalteelements 36. In diesem Fall wird eine weitere Drehung der Stützrolle unmittelbar unterbunden oder zumindest stark eingeschränkt, falls das Eingriffselement 38 mit Spiel in der Ausnehmung 24 aufgenommen ist. Andernfalls, wenn die Ausnehmung 24 nicht auf das Eingriffselement 38 ausgerichtet ist, liegt Letzteres zunächst auf der Mantelfläche der Stützrolle 23 auf und wird durch das Rückstellelement 41 mit ihr in Kontakt gehalten. Dabei geht im Zuge der Schwenkbewegung der Ladehilfe 30 der Kontakt zwischen dem Führungsbereich 40 und dem Führungselement 32 verloren. Wird die Stützrolle 23 entsprechend einer seitens der Bindematerialrolle 55 einwirkenden Kraft weiter gedreht, gleitet oder schleift das Eingriffselement 38 auf der Mantelfläche entlang, bis schließlich die Ausnehmung 24 zum Eingriffselement 38 hin ausgerichtet ist und das Eingriffselement 38 aufgrund der Vorspannung des Rückstellelements 41 einrastet. Dies geschieht auch im ungünstigsten Fall nach weniger als einer Umdrehung der Stützrolle 23. Abweichend von der gezeigten erfindungsgemäßen Ausgestaltung wäre es auch denkbar, einen Rückhaltemechanismus vorzusehen, der an den Sicherungsbügel 26 gekoppelt ist und die Drehbewegung der Stützrolle 23 beschränkt, wenn der Sicherungsbügel 26 hochgeschwenkt wird.

Wenn das Rückhalteelement 36 die Stützrolle 23 wie beschrieben arretiert, bildet diese eine feststehende Unterlage für die Bindematerialrolle 55, so dass ein Benutzer Bindematerialrolle 55 oberhalb der Stützrolle 23 ergreifen und mit einer Schwenkbewegung über die Stützrolle 23 auf die Ladehilfe 30 ziehen kann. Wenn umgekehrt eine Bindematerialrolle 55 neu aufgeladen werden soll, wird sie zunächst auf die Ladehilfe 30 aufgelegt, wonach Letztere aus der Stützposition in die Normalposition geschwenkt wird, wobei die Bindematerialrolle 55 aufwärts und nach hinten in die Rollenaufnahme 22 befördert wird. Kurz nach Beginn der Schwenkbewegung gelangt das Führungselement 32 in Kontakt mit dem Führungsbereich 40, wodurch ein Drehmoment auf die Rückhalteelement 36 ausgeübt wird, so dass dieses in Richtung der Freigabeposition schwenkt und die Drehbarkeit der Stützrolle 23 wieder freigibt.

## Patentansprüche

1. Bindeeinheit (20) für eine Rundballenpresse (1), aufweisend ein Bindegehäuse (21), eine wenigstens teilweise im Bindegehäuse (21) angeordnete Rollenaufnahme (22) zur drehbaren Aufnahme einer Bindematerialrolle (55), mit einer gegenüber dem Bindegehäuse (21) um eine Stützrollen-Drehachse (A) drehbaren Stützrolle (23), sowie eine Ladehilfe (30), die gegenüber dem Bindegehäuse (21) verstellbar ist zwischen einer Stützposition, in welcher die Bindematerialrolle (55) auf ihr abstützbar ist, und einer Normalposition,
**dadurch gekennzeichnet, dass**
ein Rückhaltemechanismus (35) dazu eingerichtet ist, eine Drehbewegung der Stützrolle (23) wenigstens zu beschränken, wenn die Ladehilfe (30) in der Stützposition angeordnet ist, und die Drehbewegung freizugeben, wenn die Ladehilfe (30) in der Normalposition angeordnet ist.

2. Bindeeinheit (20) nach Anspruch 1, **dadurch gekennzeichnet, dass** die Rollenaufnahme (22) eine Bremsrolle (25) aufweist, die um eine Bremsrollen-Drehachse (B) drehbar gelagert ist und dazu eingerichtet ist, radial außenseitig an der Bindematerialrolle (55) anzugreifen, um diese zu bremsen, und die dazu eingerichtet ist, die Bindematerialrolle (55) gemeinsam mit der Stützrolle (23) abzustützen.

3. Bindeeinheit (20) nach einem der vorangehenden Ansprüche, **dadurch gekennzeichnet, dass** der Rückhaltemechanismus (35) ein Rückhalteelement (36) aufweist, das verstellbar ist zwischen einer Rückhalteposition, in welcher es an der Stützrolle (23) angreift, um deren Drehbewegung wenigstens zu beschränken, und einer Freigabeposition, in welcher es die Stützrolle (23) freigibt.

4. Bindeeinheit (20) nach einem der vorangehenden Ansprüche, **dadurch gekennzeichnet, dass** die Ladehilfe (30) dazu eingerichtet ist, wenigstens indirekt eine Kraft auf das Rückhalteelement (36) auszuüben, um dieses zu verstellen.

5. Bindeeinheit (20) nach einem der vorangehenden Ansprüche, **dadurch gekennzeichnet, dass** das Rückhalteelement (36) um eine Rückhalteelement-Schwenkachse (D) zwischen der Rückhalteposition und der Freigabeposition schwenkbar ist.

6. Bindeeinheit (20) nach einem der vorangehenden Ansprüche, **dadurch gekennzeichnet, dass** das Rückhalteelement (36) dazu eingerichtet ist, in der Rückhalteposition formschlüssig mit der Stützrolle (23) einzugreifen.

7. Bindeeinheit (20) nach einem der vorangehenden Ansprüche, **dadurch gekennzeichnet, dass** die Stützrolle (23) wenigstens eine tangential begrenzte Ausnehmung (24) aufweist und das Rückhalteelement (36) ein Eingriffselement (38) aufweist, das dazu ausgebildet ist, in wenigstens eine Ausnehmung (24) einzugreifen.

8. Bindeeinheit (20) nach einem der vorangehenden Ansprüche, **dadurch gekennzeichnet, dass** ein Rückstellelement (41) das Rückhalteelement (36) in Richtung auf die Rückhalteposition vorspannt.

9. Bindeeinheit (20) nach einem der vorangehenden Ansprüche, **dadurch gekennzeichnet, dass** die Ladehilfe (30) durch Schwenken um eine bezüglich des Bindegehäuses (21) ortsfeste Ladehilfe-Schwenkachse (C) zwischen der Stützposition und der Normalposition verstellbar ist.

10. Bindeeinheit (20) nach einem der vorangehenden Ansprüche, **dadurch gekennzeichnet, dass** die Ladehilfe (30) ein Führungselement (32) aufweist, das dazu eingerichtet ist, beim Verstellen in die Normalposition an einem Führungsbereich (40) des Rückhalteelements (36) anzugreifen, um dieses in die Freigabeposition zu verstellen.

11. Bindeeinheit (20) nach einem der vorangehenden Ansprüche, **dadurch gekennzeichnet, dass** die Ladehilfe-Schwenkachse (C) und die Rückhalteelement-Schwenkachse (D) zueinander versetzt angeordnet sind und das Führungselement (32) verschiebbar am Führungsbereich (40) anliegt.

12. Bindeeinheit (20) nach einem der vorangehenden Ansprüche, **dadurch gekennzeichnet, dass** der Führungsbereich (40) und das Eingriffselement (38) bezüglich der Rückhalteelement-Schwenkachse (D) um wenigstens 90° zueinander versetzt sind.

13. Bindeeinheit (20) nach einem der vorangehenden Ansprüche, **dadurch gekennzeichnet, dass** das Rückstellelement (41) das Rückhalteelement (36) gegen das Führungselement (32) vorspannt, wenigstens während das Rückhalteelement (36) außer Kontakt mit der Stützrolle (23) ist.

14. Bindeeinheit (20) nach einem der vorangehenden Ansprüche, **dadurch gekennzeichnet, dass** bei einer Orientierung der Stützrolle (23), welche einen Formschluss mit dem Rückhalteelement (36) verhindert, das Rückstellelement (41) das Rückhalteelement (36) in Kontakt mit der Stützrolle (23) hält, bis deren Orientierung den Formschluss ermöglicht.

15. Rundballenpresse (1), welche eine Pressvorrichtung (9) aufweist zum Pressen von landwirtschaftlichem Erntegut zu einem Ballen (60) in einer Presskammer (13), sowie eine Bindeeinheit (20) nach einem der vorangehenden Ansprüche.
